# NEW EUROPEAN PATENT SPECIFICATION

(11) **EP 1 670 316 B2**
(45) Date of publication and mention of the opposition decision: **06.12.2017**
(45) Mention of the grant of the patent: 10.12.2008
(21) Application number: 04762873.0
(22) Date of filing: 24.09.2004
(51) Int. Cl.: A21B 3/13, A47J 37/01, B65D 81/34, B65D 85/36, B65D 25/56, B65D 25/08

(54) **PREFILLED PACKING USEABLE AS BAKING TIN AND A RECIPE FOR INGREDIENTS BEING PREFILLED IN THE PACKING**
ALS BACKBLECH VERWENDBARE VORGEFÜLLTE PACKUNG UND REZEPT FÜR IN DER PACKUNG VORGEFÜLLTE ZUTATEN
EMBALLAGE PREREMPLI S'UTILISANT COMME BARQUETTE EN FER BLANC DE PATISSERIE ET RECETTE POUR INGREDIENTS PRECHARGES DANS LEDIT EMBALLAGE

(30) Priority: 26.09.2003 DK 200301398; 26.09.2003 DK 200301399; 15.06.2004 DK 200400927
(43) Date of publication of application: 21.06.2006
(73) Proprietor: Millstone A/S, 2400 Copenhagen NV (DK)
(72) Inventor: ANGEL, Flemming, 5000 Odense (DK); ERIKSEN, Peter, 1254 Kobenhavn (DK); MORCH, Jacob, Sebastian, Lunau, 2100 Copenhagen (DK)
(74) Representative: Holme Patent A/S
(86) International application number: PCT/DK2004/000653
(87) International publication number: WO 2005/029964

(56) References cited:
- EP-A2- 0 187 701
- DE-A1- 1 815 941
- DE-U1- 8 611 548
- DE-U1- 8 709 640
- DE-U1- 8 804 308
- DE-U1- 29 918 836
- FR-A- 2 536 251
- FR-A- 2 643 546
- GB-A- 810 531
- GB-A- 1 598 947
- US-A- 3 407 078
- US-A- 3 866 816
- US-A- 4 397 879
- US-A- 5 267 686
- US-A- 5 411 204
- US-A- 5 421 512
- US-B1- 6 463 844
- 'Dr. Oetkerverlag', 2000, ISBN 3-7670-0247-7 deel ',,Schüttelkuchen-Schüttel-, Becher- und Tassenkuchen"'

## Description

The present invention relates in a first aspect to a packing, preferably being a disposable packing, in which backing ingredients can be contained, bread and/or cake dough can be shaked up or stirred, and bread and/or cake dough can be baked. In a second aspect the present invention relates to a method of producing bread and/or cake dough. An aim of the present invention is to render baking easy and comfortable, without the need for further aids.

### BACKGROUND OF THE INVENTION

Use of prior art disposable packings for baking ingredients, such as flour, yeast, fat, sugar, and salt etc., requires moving the ingredients to a container, addition of fluid, and mixing of the ingredients. Uquid, such as water, is measured out as the first ingredient, then the other ingredients are added thereto before mixing. After mixing, at least the cake or bread dough is kneaded on a table and moved to a baking tin. The purpose of kneading is to influence the protein, gluten, in such a manner that an elastic network is produced in the cake or bread dough. This network is gradually stretched as the yeast produces carbon dioxide. The network is a basis for the cake or bread dough's ability to rise as the carbon dioxide otherwise would escape. It is necessary to grease the baking tin, and to clean the baking tin, container etc after use. Additionally, it may be difficult to release the new-baked bread and/or cake from the baking tin without destroying the shape of the bread and/or cake.

Several attempts have been made in order to improve bread manufacturing and especially in order to improve the machinery used for bread manufacturing. For instance, German Patent EP-PS0625308 discloses a method for producing bread in which cake or bread dough is produced by kneading in a mixer. The mixer includes a system which automatically cleans the mixer after use. The aim of the method according to the German patent is to avoid manual kneading of dough and to reduce the succeeding cleaning of the mixer. The patent indicates that making of bread is a troublesome and demanding process which one seeks to make easier.

US 3,866,816 relates to the method of fabricating a packaging for food ingredients comprising a combination paperboard and plastic film tray suitable to be subjected to boiling or baking. GB 1598947 discloses a packing according to the preamble of claim 1.

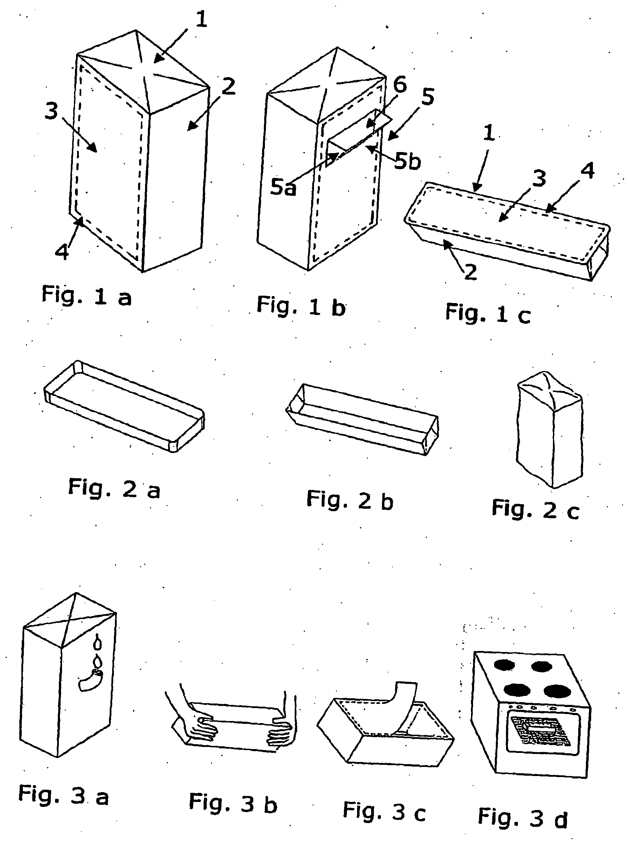

Prior art packings and tins are shaped in many different ways as indicated schematically in figs. 2a-c which shows three different shapes. Fig. 2a is a prior art baking tin made of paper, fig. 2b is a prior art baking tin made of steel and fig. 2c is a prior art paper back packing for flour.

### SUMMARY OF THE INVENTION

The present invention relates in a first aspect to a packing for food ingredients. Preferred embodiments thereof comprise preferably a container having first part and a second part, wherein the second part being removable from the first part to provide an opening into said container, the first part being made from one or more materials being resistant to temperatures up to 300°C, such as up to 250°C, such as up to 200°C preferably between 170°C and 300°C to allow the first part to be used as a baking tin. The packing being adapted to keep ingredients contained in the packing inside the packing prior to removal of the second part and the packing preferably contains ingredients for producing bread and/or cake dough.

By using materials as the ones discussed herein, a packing according to preferred embodiments of the present invention may be used to store baking ingredients, mix baking ingredients with liquid as well as serve as baking tin.

According to preferred embodiments of the present invention, the packing may be vacuum packed or in general air tight packed. Furthermore or alternatively, the ingredients contained in the packing may be vacuum packed separately. By these measures, the validity of the ingredients may greatly be enhanced.

With the present invention it is, in general, no longer necessary to move the baking ingredients from the packing to a container, and the dough from the container to a baking tin. Furthermore, the process of producing baking dough and the baking does not include greasing of the baking-tin, dishwashing and cleaning of the table etc. after baking. Moreover very little dough is spilled or left over, caused by mixing in a different container or kneading on a table. In addition a very high level of hygiene is obtained due to the fact that the dough is not exposed to possibly dirty equipment or hands.

In accordance with the present invention, the dough may preferably be shaked up or stirred by utilizing a spoon, stick or the like. In both cases, the liquid is preferably added after the dry ingredients have been added to the packing and the resulting dough is typically quite moist and can be baked in the packing.

Liquid, such as water, milk, and/or oil, is added to the ingredients contained in the packing. The packing with ingredients and liquid is being shaked or stirred resulting in the mix becoming bread and/or cake dough. The cake or bread dough may then rise, if necessary, where after the packing containing the cake or bread dough is placed in an oven such as a hot air or conventional oven for baking. The freshly baked bread and/or cake may easily be released from the baking tin by tearing apart the baking tin.

Typical and preferred materials for the packing, according to the present invention, and in particular the first part thereof, include materials being of such kinds that the ingredients, whether dry or wet, stored in the packing may be preserved for a long time, such as up to 2 years, or up to 3 years, and being able to withstand high temperatures up to 300°C, such as up to 250°C without liberating matter and taste, enabling easy release on baked items and allowing easy disposal after use. Suitable and preferred materials include cardboard, paper, plastic, foil, wax, metal foil, silicone etc. in different variants, combinations and thicknesses. Packings according to the present invention may have many different shapes, sizes and looks. In particularly preferred embodiments, the second part is made from a similar or identical material as the first part.

The second part comprises a lid which upon removal/opening provides an opening closable by the lid. In addition, a seal between the lid and the packing may preferably be provided and/or enhanced by an o-ring, glue, tape or melted together. In particularly preferred embodiments, the lid may preferably be provided on a foldable part of the packing, and the foldable part may preferably be adapted to be folded in such a manner that the lid can be depressed below an outer surface of the first and/or the second part. Advantageously, the lid may comprise gripping means for extracting the lid to a position above the outer surface of the packing by use of a finger.

The packing may preferably comprise a metering device for metering an amount of liquid added to the packing. In preferred embodiments, the metering device may preferably comprise a transparent element provided in the first and/or second part through which transparent part the level of liquid present in the packing may be identified. The transparent part being preferably provided with a visible scale. Alternatively or in combination therewith, the metering device may preferably comprise an overflow opening through which excess of fluid may leave the container. The overflow opening may preferably be closable, such as by a lid or the like, so as to prevent spilling from the opening as a result of the succeeding shaking of the packing. Alternatively or in combination therewith, the amount of liquid could be metered by a measuring cup that goes along with the embodiments of the invention.

In preferred embodiments of the packing the interior of the packing may be divided into sections being sealed off from one another by one or more sealing members. In particular, one of the sections may be in fluid communication with the opening and this section may preferably contain for instance yeast. The yeast may then fall into the other ingredients, when the lid is being opened by pressing, lifting or screwing.

The section being in fluid communication with the opening may preferably have a volume corresponding to the amount of liquid to be added to the packing. The one or more sealing members may preferably be adapted to break as a result of adding liquid to the container, pull and/or shaking the packing after liquid has been added to the packing. In particularly preferred embodiments the one or more sealing members may be made from a liquid soluble material.

The second part may preferably comprise a tear off section which when being removed provides an opening into the packing. Preferably, the tear off section provides an opening having an area larger than 1/10th, such as larger than 2/10th, preferably larger than 3/10th, such as larger than 4/10th, preferably larger than 5/10, such as larger than 6/10, even larger than 7/10 and in some embodiments even larger that 8/10 such as larger than 9/10 of the total outer area of the packing. Alternatively or in combination therewith the packing may be provided with one or more breathing openings which may allow the dough to breath, that is to allow gas to be exchanged between the interior of the packing and surroundings. These breathing openings may initially be covered by a tear off foil so that the packing may remain sealed from the surroundings until being used.

The volume of the packing may preferably be within in the range of 0.1-5 litres, such as within the range of 0.2-4 litres, preferably within the range of 0.3-3 litres, such as within the range of 0.4-2 litres, preferably within the range of 0.5-1.5 litres, such as within the range of 0.5-1 litres.

In accordance with particularly preferred embodiments, the packing may be made from a flexible material so that the packing is foldable.

In preferred embodiment the packing is fluid tight prior to removal of the second part.

The package is preferably fluid tight sealed in order to preserve baking ingredients until use.

In particularly preferred embodiments the packing according to the present invention the first part comprises an open cavity and the second part comprises a lid covering the opening of the cavity, the two parts being joined preferably after filling the packing with ingredients of which one or more are stored in one or more separate containers. The second part comprises
- scored lines defining a tear-open flap defining an opening, preferably being reclosable, in a part of the lid through which liquid can be added,
- a metering device comprising a transparent part through which the level of liquid present in the packing may be identified, said transparent part being preferably provided with a visible scale,
the one or more containers being arranged within the cavity in such a manner that they are torn open as a result of the opening of the tear-open flap.

Furthermore, the one or more containers containing one or more ingredients may preferably be attached to the inside of the packing, preferably to the second part, and/or in the region in which the two parts are joined, in such a manner that the ingredients contained in said one or more containers are added to the other ingredients, when the tear-open flap is opened.

In addition, the one or more containers may preferably have an elongated shape and have one end attached to the tear-open flap and the other end attached to the packing distant from the tear-open flap, preferably in region where the first and the second parts are joined.

The one or more containers may preferably be positioned with their longitudinal direction at an angle of about 90 degrees, such as about 85 degrees, such as about 80 degrees, such as about 75 degrees, such as about 70 degrees, such as about 65 degrees, such as about 60 degrees, such as about 55 degrees, such as about 50 degrees, such as about 45 degrees, such as about 40 degrees, such as about 35 degrees, such as about 30 degrees, such as about 25 degrees, such as about 20 degrees, such as about 15 degrees, such as about 10 degrees, such as about 5 degrees, such as about 0 degrees to the longitudinal direction of the container.

A second aspect of the present invention relates to a recipe according to which liquid and ingredients contained in a closed, such as sealed, container are shaked up or stirred to a bread and/or cake dough. In particular, the second aspect relates preferably to a method of producing a bread and/or cake dough, such method utilises a packing being prefilled with baking ingredients, the method comprising adding liquid to the packing and shaking the packing. The packing is preferably a packing according to the first aspect of the present invention.

Preferably, liquid is added in an amount so that the ratio in weight between liquid and the other ingredients is between 1:0.50 and 1:2.50. One or more of the ingredients may preferably be a raising agent such as yeast, instant yeast, baking powder or baking soda Liquid is preferably added to the container after at least 75% by weight of the other ingredients are mixed.

Kneading of the cake and/or bread dough is in general not needed in connection with the present invention as the mechanical action on the cake and/or bread dough takes place by shaking. The troublesome and demanding kneading is thereby saved and the succeeding dishwashing, cleaning of table etc. is reduced.

In accordance with preferred embodiments of the present invention, the ratio in weight between liquid and other ingredients will be between 1:0.50 to 1:2.50 providing bread and/or cake dough being particularly well suited for shaking. The liquid may advantageously be added last, in contrast to the traditional way of baking, where you start with the water and then add the other ingredients.

A recipe for bread and/or cake dough having a ratio in weight between liquid and other ingredients as above have the potential to produce different kinds and shapes of bread and/or cake. For instance rye bread, wheat bread, bread made of bolted rye flour, wholemeal bread, pizza, buns, flutes, tart, flaky pate, pound cake and sponge cake. The bread, pastry etc. produced has a good crumb, a fine structure and has a delicate morsel. By adding the liquid last, the other ingredients may be pre-mixed before addition of liquid and shaking/stirring. In this way, the mix of ingredients (except any liquid substances) may be prepared well before liquid substances are added, whereby all the time consuming preparations is spared and a bread and/or cake dough may be prepared fast when the need for fresh bread and/or cake arise.
The mix could be dried to a level under 12% humidity of air, to provide a longer period of validity.

A recipe according to the present invention may advantageously comprise powdery ingredients as this may ease mixing of liquid and other ingredients during shaking.

Additionally, a package of ingredients, such as a package containing sunflower seed may be provided together with the package to allow the consumer to add further ingredients either before baking and/or to bread and/or cake after baking to give the bread and/or cake a personal characteristics.

### BRIEF DESCRIPTION OF THE DRAWINGS

In the following the present invention, and in particular preferred embodiments thereof will be disclosed in connection with the enclosed figures, in which:
Figs. 1a,1b and 1c show schematically preferred embodiments of the pre-filable packing according to the present invention,
Figs. 2a-c show schematically prior art packings and baking tins,
Fig. 3a-d show schematically use of a prefilled packing according to the present invention, the use is shown divided into four steps,
Fig. 4 shows schematically different shapes of the packing according to the present invention,
Figs. 5a-c shows schematically a closure according to preferred embodiments,
Figs. 6a-c shows schematically a foldable packing according to preferred embodiments of the present invention,
Figs. 7a, 7b and 8 show preferred embodiments according to the present invention,
Fig. 9 shows a preferred embodiment having a metering device,
Figs. 10a-c show schematically different closures of a packing according to the present invention,
Figs. 11a-i show schematically different measures according to preferred embodiments for dosing of the liquid to be added to the packing.
Fig. 12 shows a bar chart of the weight ratios between liquid and other ingredients according to preferred embodiments of the present invention,
Fig. 13a-d show schematically a prior art method of producing cake or bread dough divided into four phases,
Fig. 14a-c show schematically a method of producing cake or bread dough according to the preferred embodiments of the present invention,
Figs 15-23 show different embodiments of the present invention, wherein:

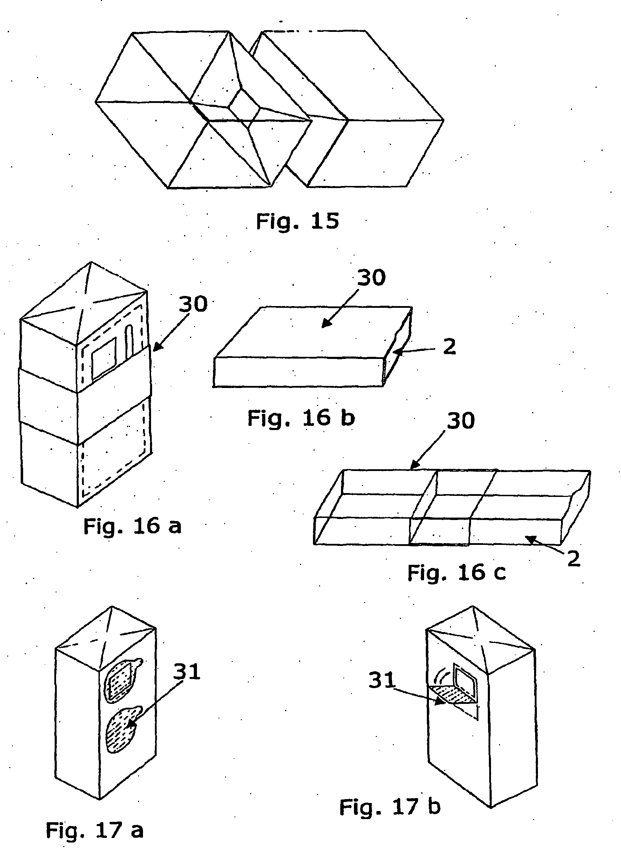

Fig. 15 shows a packing comprising two rooms resulting in two smaller breads,
Fig. 16a-c show a way to pack the packing. On the wrapped around part 30 the mode of employment is preferably printed,
Fig. 17a and b show different closing means for closing the opening of the packing. In figs. 17a and 17b a sticker 31 arranged on the side of the packing can be moved to a position where it covers the opening in the packing,

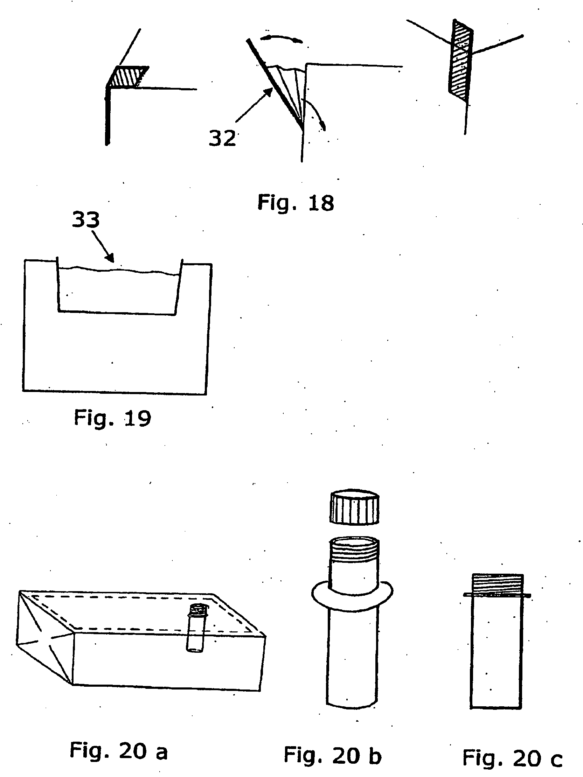

Fig. 18 shows a filling device 32,
Fig. 19 shows a liquid container 33 being built into the packing in such a manner that no liquid needs to be added to the packing,

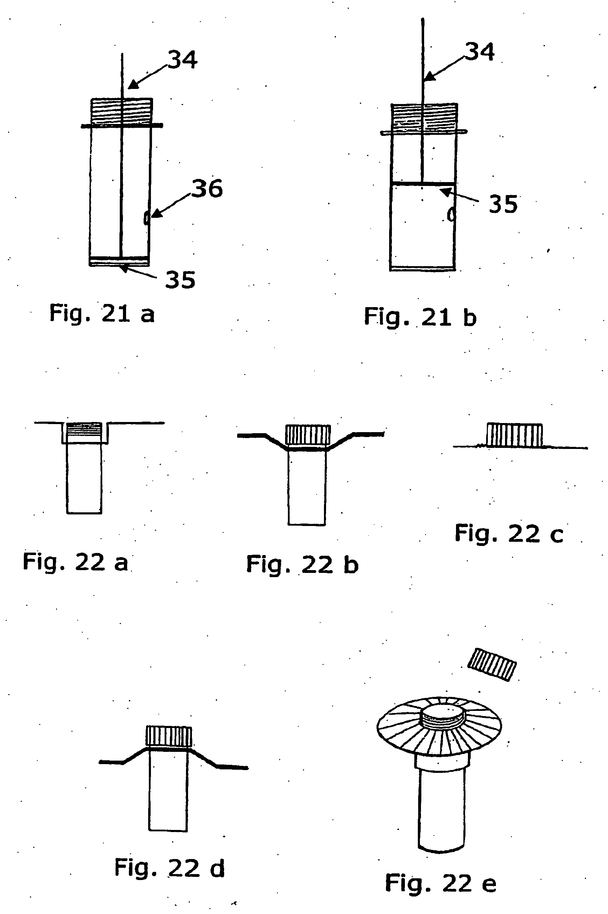

Figs. 20a-c and 21a-b show two embodiments of a packing having a metering device for metering the amount of preferably liquid being added to the packing,
Fig. 22a-e show folding of a screw lid adapted to be arranged flush with the surface of the packing,

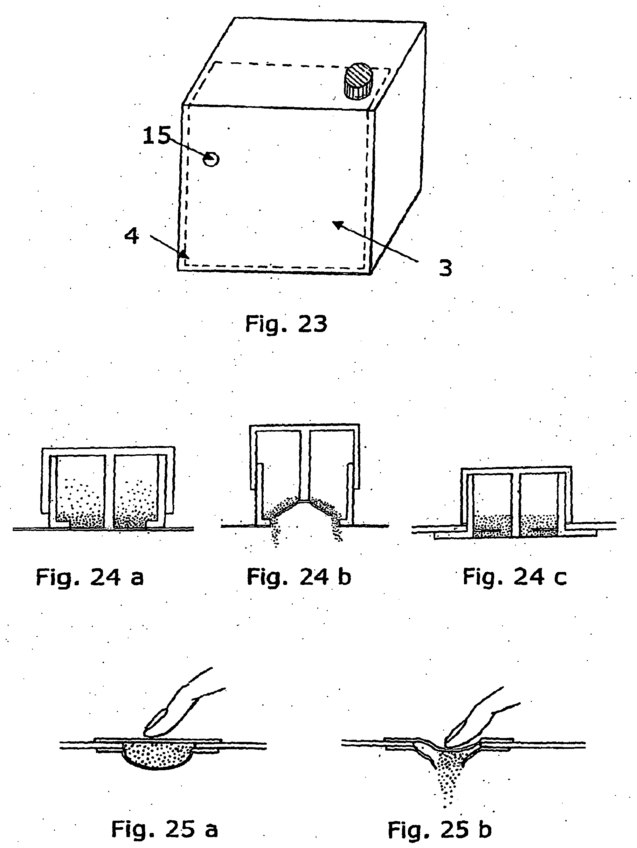

Fig. 23 shows a preferred embodiment wherein a tear off part 3 extends over two sides and wherein a round window 15 serving as metering device is arranged thereon,
Fig. 24a-c show a device that contains yeast or other ingredients placed on the second part of the embodiment,
Fig. 25a-b show a device that contains yeast and/or other ingredients, placed on the inside of the second part of the embodiment,

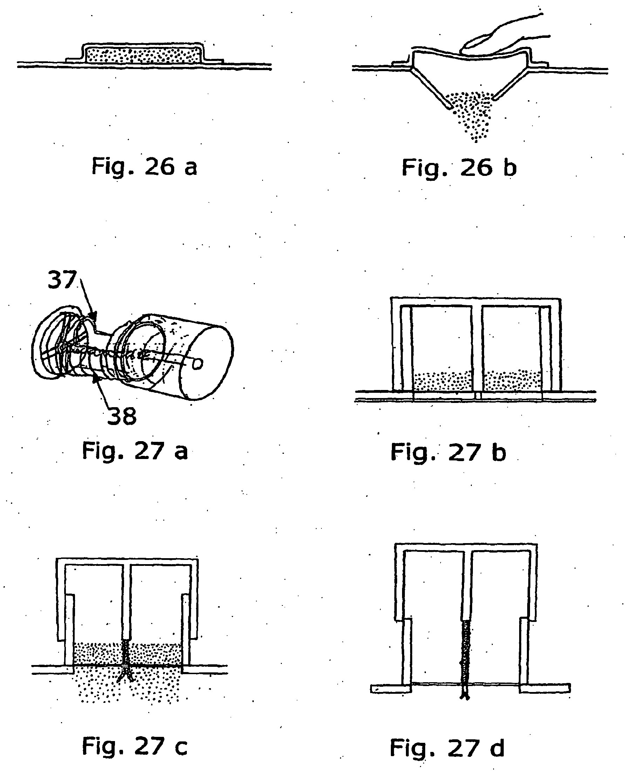

Fig. 26 shows a device that contains yeast or other ingredients placed on the outside of the second part of the embodiment,
Fig. 27a-d show a device that contains yeast or other ingredients, placed on the second part of the embodiment,

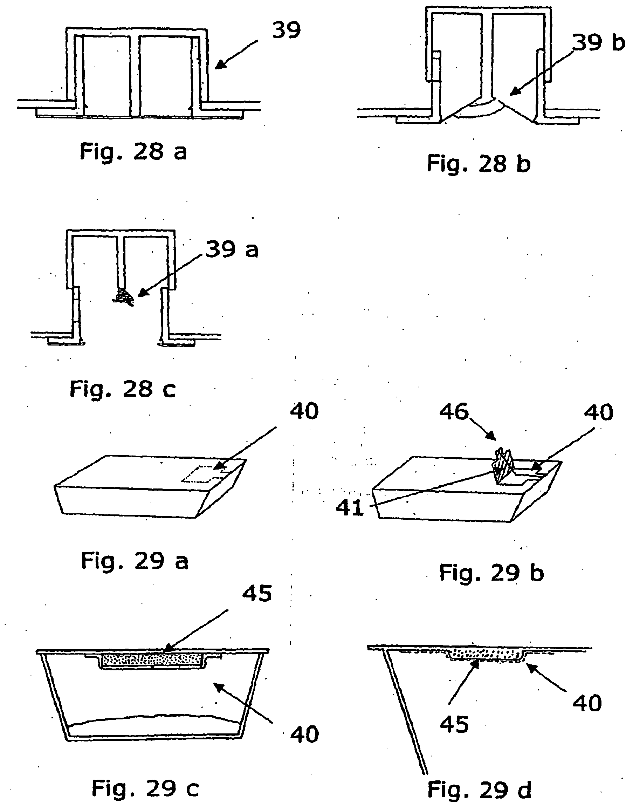

Fig. 28a-c show a device with multiple functions, the device is placed on or is a part of packing according to the present invention,

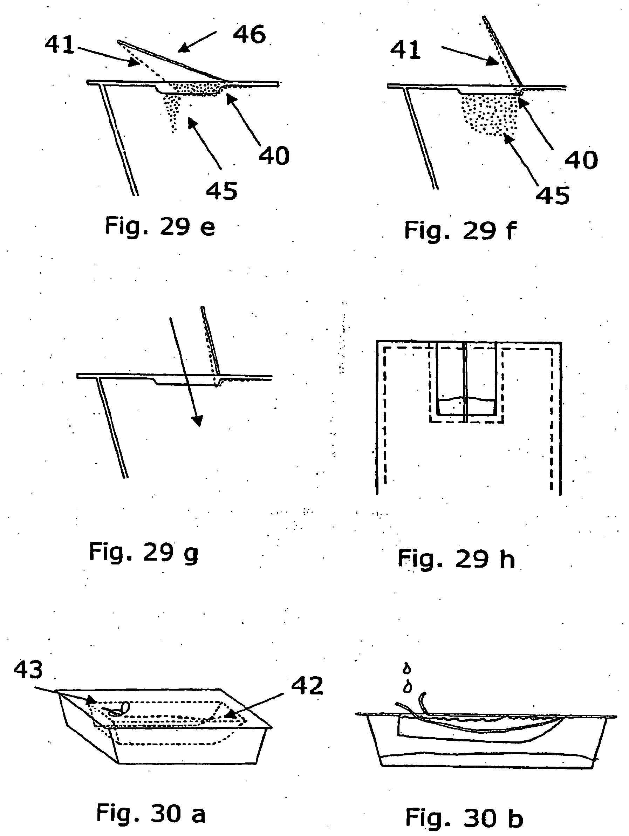

Fig. 29a-h show a packing according to the present invention having a build in container 40 for yeast 45 or other ingredients,

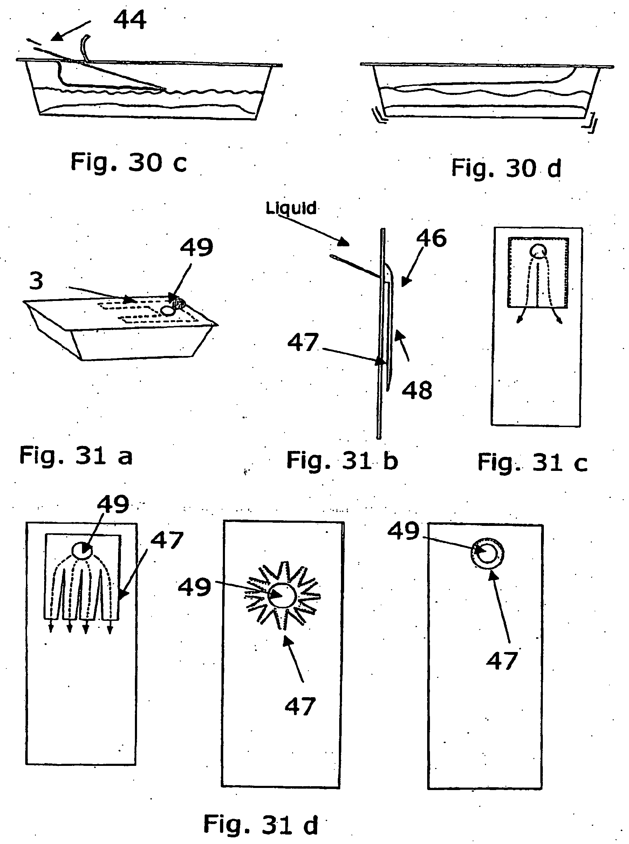

Fig. 30a-d show a packing according to the present invention having a build in container 42 for containing liquid,
Fig. 31a-d show a packing according to the present invention designed to ease filling of liquid into the packing,

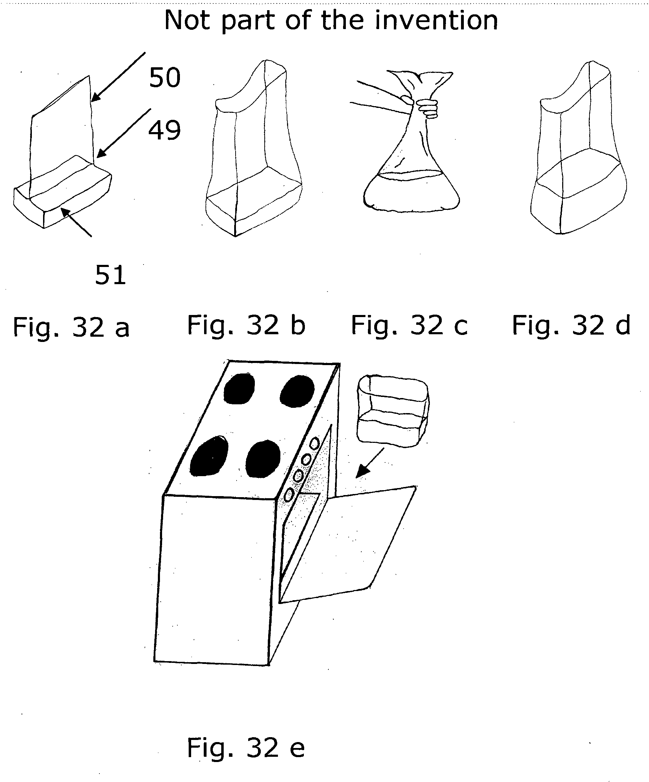

Fig. 32a-e show schematically the use of a prefilled packing (not part of the invention),

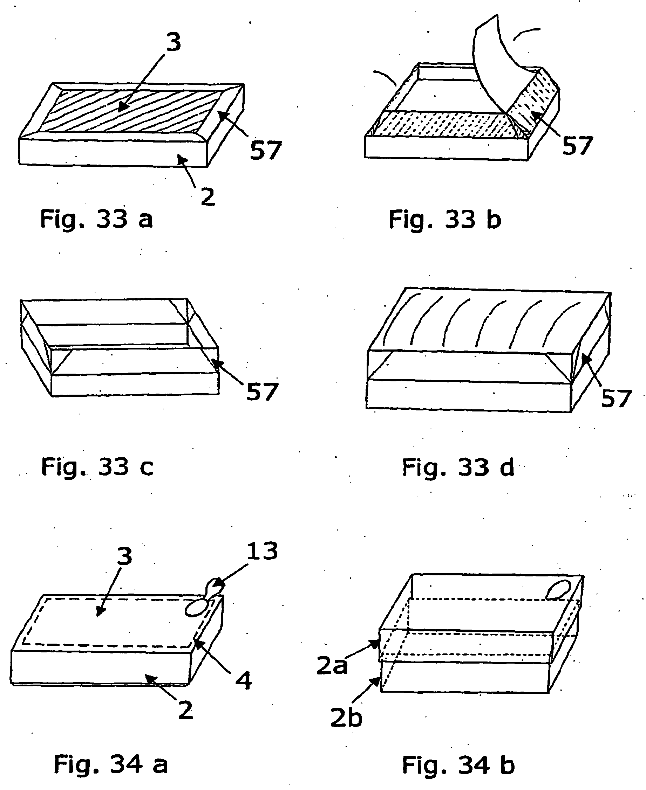

Figs. 33 and 34 show schematically different types of packings according to the invention in which it is possible to increase the volume of the packing, preferably before the liquid is added,
   and

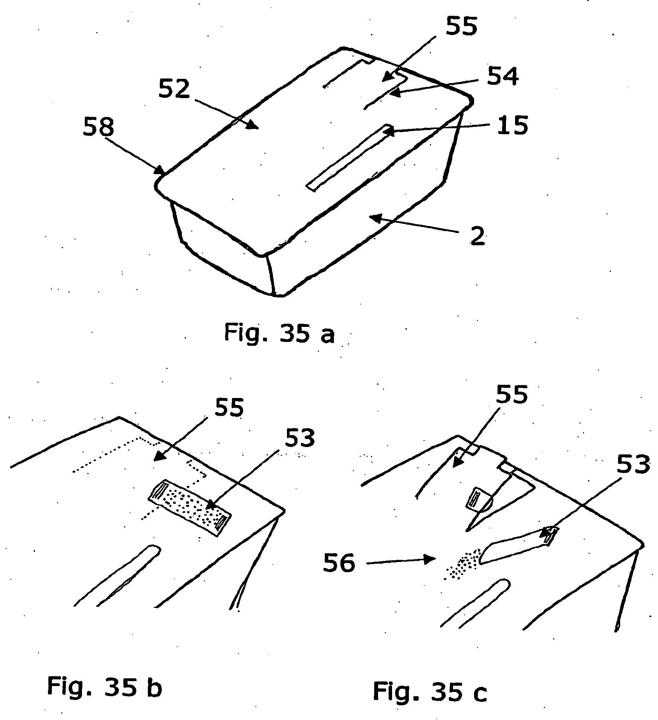

Fig. 35a-c show a preferred embodiment of a packing according to the present invention.

### DETAILED DESCRIPTION OF PREFERRED EMBODIMENTS OF THE INVENTION

With reference to fig. 1a and 1c first preferred embodiment of a packing 1 according to the present invention is shown. The packing 1 is made from one or more materials being resistant to temperatures up to typically 220°C, which enable the packing 1 to be used as a baking tin. Within the meaning of "being resistant to temperatures up to typically 220°C" is that the material does not rub off, at least to an extend governed by regulations, (chemically as well as taste) on the ingredients contained in the packing while being placed in the oven and that the material does not decompose to an extent where the ingredients can not be contained by the packing. Materials considered particularly useable are cardboard being coated by silicone, PET, aluminium foil, plastic or a greasy substance, such as butter or the alike (in general a fatty substance) on the side facing the interior of the packing by a material preventing liquid to contact the cardboard.

The packing 1 is in general box-shaped container and comprises a first part 2 and a second part 3 being a part which can be removed on one of its faces. The second part 3 is preferably constituted by a local weakening of the cardboard, for instance as indicate in fig. 1 by a scoring 4. The scoring 4 is made in such a manner that the packing 1 remains fluid tight at least in the area of the scoring 4, which may be provided by scoring only the cardboard and not the coating material arranged on the inner surfaces of the packing 1.

The packing 1 is provided with a lid 5 that is adapted to close an opening 6. The combination of the opening 6 and the lid 5 provides the possibility to add ingredients, in particular one or more liquids, into the packing 1. In order to ease addition of such ingredients, the lid 5 constitutes in its open position (as indicated in fig. 1) a funnel. In its closed position the side walls 5a of the lid 5 is folded so that the front wall 5b is positioned in a plane parallel to the plane of the side in which the opening 6 is provided.

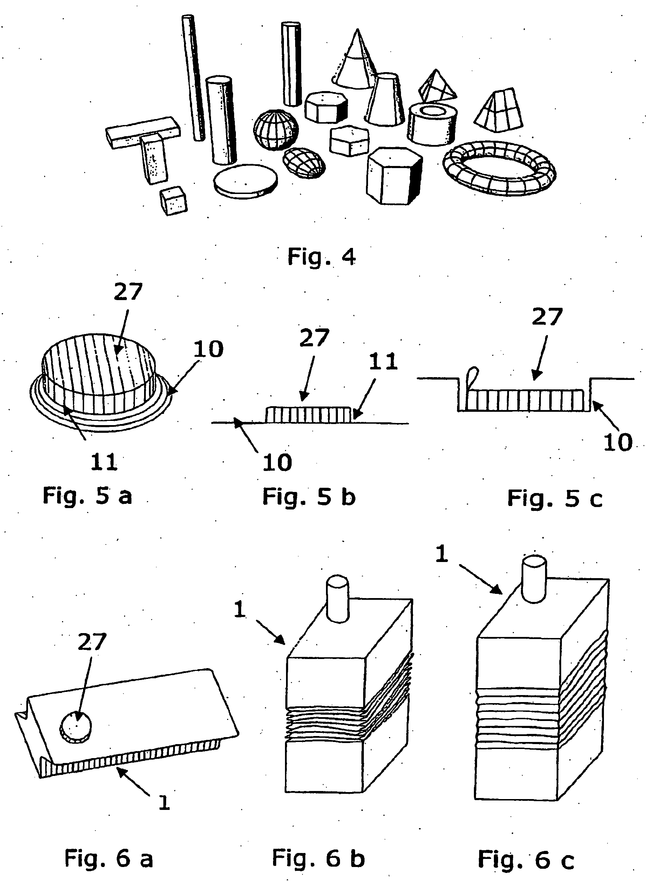

In an alternative embodiment the lid 5 is a screw plug and the opening is a small tube or press-on lid having a thread matting that of the screw plug 27 as indicated in fig. 5a-c. As further indicated in fig. 5, a foldable part 10 of the packing circulating the lid 5 may be folded so that the lid 5 may be depressed below the surface of the packing as indicated in fig. 5c, and the lid 5 is provided with a ring which can be used to pull the lid 5 up from its depressed position. An o-ring 11, glue, and/or a welding is provided to seal the closure. In a further embodiment, the packing is folded after ingredients are added (see fig. 6.a, 6.b and 6c). Figs. 6b and 6c show the same packing in a folded state and an unfolded state respectively. When the lid 5 in co-operation with the o-ring 11 seals off the packing, the packing will maintain its folded state whereby the space needed for storage and shipment is highly reduced. Producing a vacuum within the packing may increase the effect and enhance the validity of the ingredients. A further embodiment of a folded packing 1 is shown in fig. 6.b. In this embodiment a central part of the packing 1 is folded to allow compression of the packing 1.

Use of the packing 1 is schematically indicated in fig. 3 showing four different steps employed during use of a packing 1 according to the present invention. Fig. 3a shows the step of applying liquid, such as water, to the packing 1 (in an embodiment where the lid 5 comprises a screw plug and a tube). After the prescribed amount - or in general a sufficient amount - of fluid is applied into the packing 1, the packing is agitated in order to mix the prefilled ingredients and the liquid added. After mixing, removable part 3 may be removed as shown in fig. 3c where after the packing is placed in an oven as shown in fig. 3d.

In another embodiments, the packing 1 comprising breathing openings being openings having a size of 1 mm to 20 mm diameter, such as 2 mm to 18 mm diameter, such as 4 mm to 16 mm diameter. The shape of the holes could be round, rectangular, 5 sided, or similarly. Such breathing holes are particular useful in cases where the packing 1 is used to produced e.g. a cake that need to be covered while being baked as the holes provides exchange of gas between the interior of the packing 1 and its surroundings.

The packing 1 of fig. 1 is pre-filled with baking ingredients; in particular preferred embodiments all ingredients except the liquid ingredients are pre-filled. By pre-filled is preferably meant that all the ingredients are added to the packing at a factory so that the customer only needs to add the liquid ingredient to the packing.

Thus, another aspect of the invention relates to a method of mixing baking ingredients with one or more liquids. Preferably, the packing according to the present invention is being loaded with the dry ingredients where after these ingredients are mixed by shaking the packing or stirring in the packing. After such a pre-shaking/stirring the liquid is added to the packing, and the dough is generated by shaking or stirring in the packing.

In accordance with preferred embodiments of the present invention, the ingredients are loaded into the packing at a factory site and the packing with ingredients is sealed for shipment so that the packing with ingredients comprise a ready-to-use off-the-shelf item baking mix.

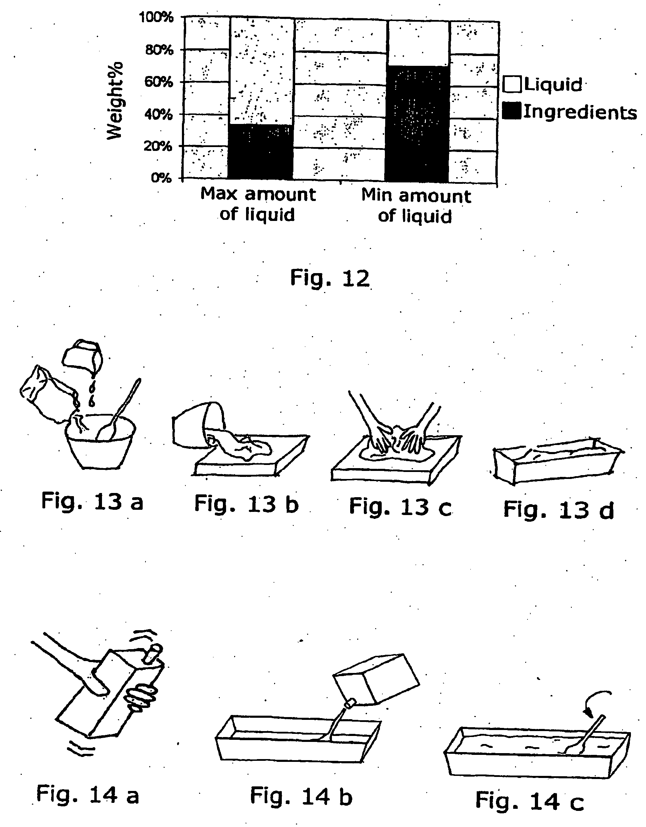

Preferred ratios counted in weight between liquid and other ingredients of the cake or bread dough are illustrated in fig. 12. The left column shows that it is preferred to keep the maximum amount of liquid below 67% by weight and at least 33% by weight of ingredients. Right column shows that it is preferred to keep the minimum amount of liquid above 29% by weight and that is preferred to keep the amount of ingredients lower than 71% by weight.

Fig. 13 shows prior art baking in four succeeding steps which as shown include mixing of liquid, which is the first thing you put into the bowl, (which may be constituted by a number of liquids being pre-mixed) and other ingredients in a bowl, placing the cake or bread dough on a table for kneading and placing of the kneaded cake or bread dough in a baking tin.

Shaking of the packing or stirring of the ingredients according to the present invention containing liquid and other ingredients is shown in fig. 14 which also shows placing of the cake or bread dough in a baking tin. However, if the packing is used as backing tin, the latter is, of course, not done.

In particularly preferred embodiments the packing is pre-filled with ingredient to be mixed with the liquid. By pre-filled is preferably meant that the ingredients are filled into the packing at a factory site so that once the packing is shipped to and offered for sale for instance in a shop no further ingredients except liquid(s), yeast and optionally extra corn seeds, are to be added to the packing in order to make a baking dough.

The ingredients may in many preferred embodiments include a raising agent. The raising agent may, for instance, be yeast, baking powder or baking soda. In the yeast example it can be made into granulates, which can be encapsulated by a suitable coating material such as gelatine, sugar, starch or the like. Dry yeast may be used with or without coating. Furthermore, dry yeast as well as the other raising agents may be encapsulated in a fatty substance.

However, it may be preferred to keep the yeast separated from the other ingredients and in such circumstances yeast may be kept in a container or may be purchased separate and added along with the liquid, as shown for instance in figs. 24 - 29.

In embodiments where the yeast is kept separated in a separate container (plastic bag, foil, or the like) this packing may be a small compartment formed in the container and being sealed by for instance a foil that may be broken or by a liquid soluble foil which will dissolve in the liquid. Suitable material for such a liquid soluble materials are plastic of all kinds, tinfoil, paper, cardboard or the like.

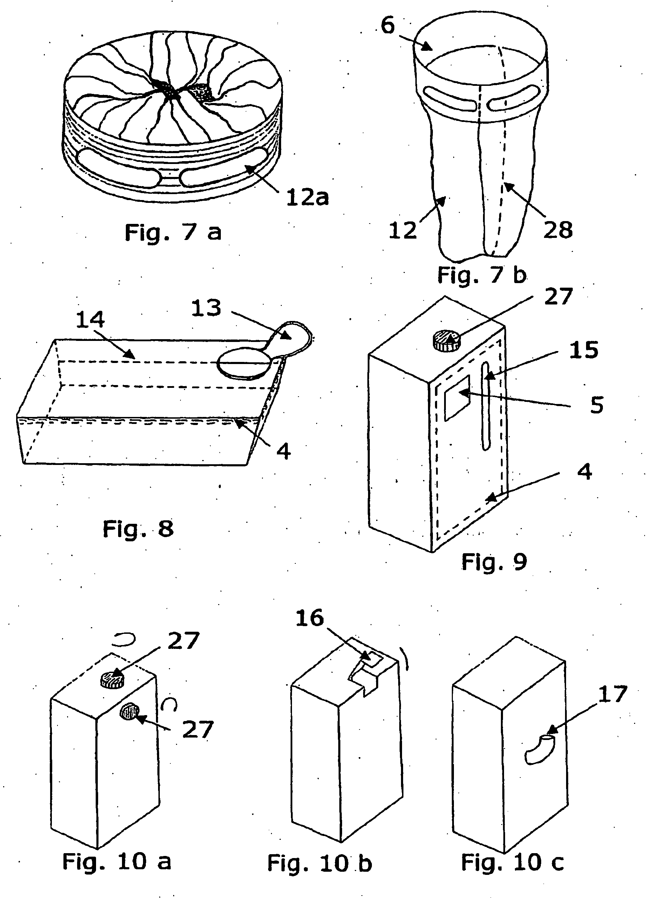

In other preferred embodiments, the yeast is contained in a bag-like structure 12 as the one indicated in fig. 7.b extending from the opening 6 into the packing 1. The volume of bag-like structure matches the volume of the liquid to be added and is provided with one or more weakened regions/lines 28 which will break once the intended amount of liquid is filled into the bag-like structure to allow the mixture of yeast and liquid to get into contact with the other ingredients contained in the packing 1. The weakening of the bag-like structure may also be given such a strength that it will not automatically break open when the intended amount of liquid is added but will break open once the packing is shaken. In such embodiment, the opening 6 through which liquid is added is sealed before the packing 1 is shaken to avoid spillage.

It should be noted that the apportion of liquid by providing the bag-like structure with the size matching the amount of liquid to be added may advantageously be used also in connection with embodiments where the bag-like structure does not contain yeast or anything at all.

As indicated in fig. 7.a the opening comprises a small threaded tube 12 being designed to co-operate with a threaded lid 5 and an o-ring to seal the opening. The tube 12 comprises air openings 12a allowing air to escape the interior of the packing while liquid is added to the packing.

Figs. 8 and 9 shows further embodiments of a packing 1 according to the present invention. The packing of fig. 8 is a rectangular shaped box having a scoring 4 (that also could be placed on the side of the box) enabling tear off of the upper part of the packing after the ingredients are mixed in the packing 1. A closure 13 comprising a hinged lid is provided in the upper part of the packing 1. A horizontal mark 14 (preferably in the form of a line) is applied to the interior serving as a level indicator for measuring the correct amount of liquid to be added to the packing. The packing 1 shown in fig. 9 is also a rectangular shaped box having a scoring 4. On one side of the packing 1 a transparent window 15 is applied through which the amount of ingredient and liquid present in the packing may be estimated. The window 15 may furthermore comprise a mark indicating the correct amount of liquid to be added to the ingredients within the packing 1. In fig. 9 two different openings are indicated, a threaded lid 27 as the one discussed for instance in connection with fig. 6 or a funnel shaped opening 5 as discussed in connection with fig. 1.

In fig. 10 different closures are shown. In fig. 10.a it is indicated that the threaded lid 27 may be arranged either on the top of the packing 1 or on one of the sides of the packing. The lid may also comprise or be a press-on lid which is attached to the container by a snap fitting. In fig. 10.b the closure is a tear-open flap 16 and in fig. 10.c the closure is a tube 17 either being threaded to receive a threaded lid 27 or being sealed by a tear-off foil.

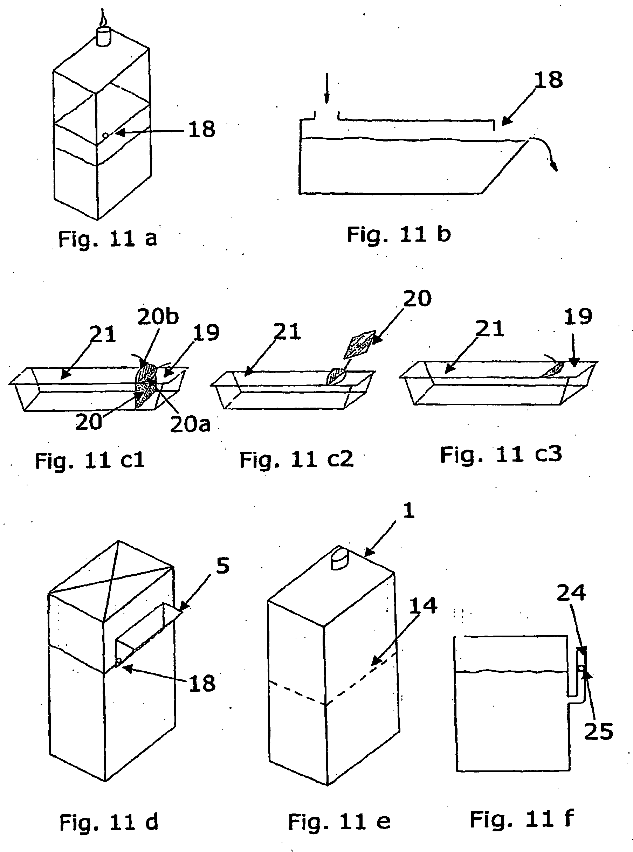

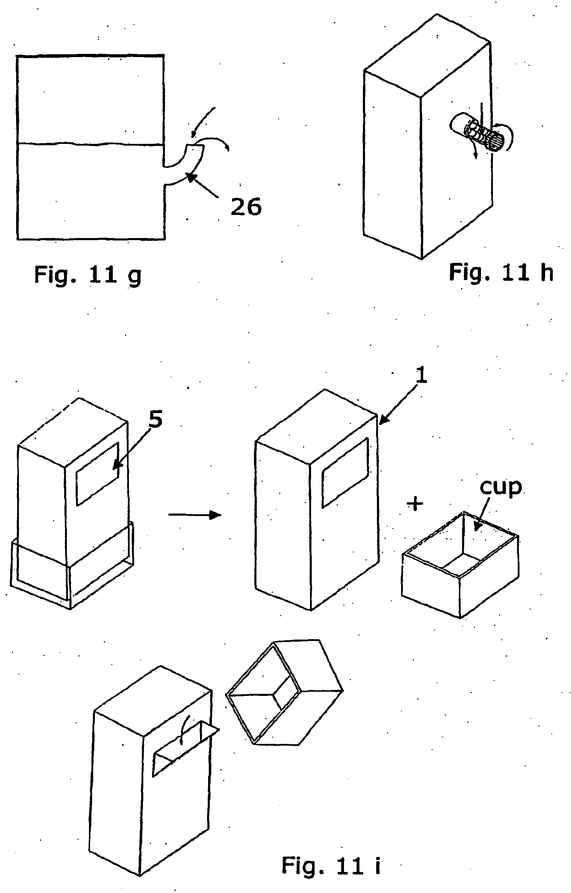

In fig. 11 different measures for dosing of the liquid to be added to the packing are indicated. In fig. 11a the packing is provided with an overflow opening 18 through which the liquid flows when the appropriate amount is added to the packing 1. Fig. 11b is a cross sectional view of a packing 1 having an overflow channel 18 provided in the packing preferably in the same manner as the funnel shaped opening of fig. 1.

In one embodiment of the invention, the packing 1 indicated in figs. 11c1-c3 is prefilled with liquid in compartment 19 and ingredients in compartment 21 being arranged as separate compartments. The partition 20 within the packing separating the liquid in compartment 19 and the ingredients in compartment 21 is preferably made from a material or have one or more scoring lines that breaks as a result of shaking the packing.

In the embodiment shown in figs. 11c1-c3, the partition 20 is a part that is removed by pulling in flap 20a, this flap 20a being connected to the partition 20. The flap 20a is formed by breaking scoring lines present in the lid covering the packing. After removal of the partition 20 as shown in fig. 11c2, the liquid and the ingredients can be mixed by shaking the packing 1. To avoid spilling during shaking, the opening arisen from removal of the flap 20a can be covered by flap 20b.

In another embodiment of the invention indicated in figs. 11c1-c3, the liquid is not present in the compartment 19 beforehand but is added as a part of the baking process through the opening formed by breaking the scoring lines that form the flap 20a. In this case compartment 19 serves as a measuring device.

Another embodiment of the invention corresponds to the one shown in figures 11c1-c3 except that it additionally has a third compartment separated from compartments 19 and 21, this third compartment being a void. The void is useful in the sense that it leaves space for effective mixing of the ingredients contained in compartment 21 and the liquid contained in compartment 19.

Fig. 11d shows the funnel shaped opening provided with an overflow opening 18. Fig. 11e shows a transparent packing 1 having a marking line 14 indicating the appropriate, such as intended, level of liquid in the packing 1. In a further embodiment, the marking line 14 is provided on the inside of the packing 1. The packing 1 may be covered by a tear-off cover 30 as indicated in fig. 16. The cover/wrapping may in preferred embodiment cover from 1% to 100 % of the packing 1, The cover 30 may serve a number of purposes among which are considered, protection from sunlight (or light in general), the cover may contain information on how to use the packing whereby the packing may be freed from such printing before being placed in an oven and the cover may seal the packing 1. The embodiment of fig. 11f comprises a transparent tube 24 with a float 25 arranged within. When liquid is added to the packing 1, the float 25 rises in the tube 24 thereby indicating the amount of liquid in the packing 1. The embodiment of fig. 11g comprises an overflow device in form of a tube 26 having its mouth arranged at the level which the liquid is intended to be in when the correct amount is added to the packing 1. Fig. 11h shows a packing having a filling device with an overflow and fig. 11i shows a packing having a measuring cup arranged on the bottom of the packing.

Figs. 16a-c show different ways of wrapping the packing. In fig. 16a the wrapping 30 has the mode of employment or other information printed and is intended to be torn off before use of the packing. In fig. 16a and b the wrapping 30 constitutes the second part and is formed as an open-ended box in which the first part 2 is arranged. When the packing is to be used, the first part 2 is pulled out from the wrapping as indicated in fig. 16c the remaining ingredients such as liquid is added, and the first part 2 is pushed back in the wrapping before shaking.

Figs. 20a-c and 21a-b show two embodiments of a packing having a metering device for metering the amount of preferably liquid being added to the packing. In fig. 21 a float with a metering stick is arranged within a tube being in fluid communication at location 35 with the fluid inside the packing. The tube is provided with holes 36 through which liquid poured into the packing through the tube flows out. In fig. 20 the tube is shown as an integral part of the packing and is provided with a screw lid,

Fig. 24a-c show a device that contains yeast or other ingredients, placed on the second part of the embodiment. By lifting or screwing an outer part of the device, the ingredient(s) will fall into the other ingredients. By sealing the yeast inside the lid, the shelf-life may increase due to the fact that the yeast is not exposed to neither air or fluid such as water,

Fig. 25a-b show a device that contains yeast and/or other ingredients, placed on the inside of the second part of the embodiment. By pressing on the device, the yeast fall into the other ingredients due to an elastic outer membrane and an inner membrane that breaks when pressed upon. As in fig. 24 shelf-life may be increased by the manner the yeast is contained,

Fig. 26 show a device that contains yeast or other ingredients placed on the outside of the second part of the embodiment. By pressing on the device, the yeast fall into the other ingredients. As in fig. 24 shelf-life may be increased by the manner the yeast is contained,

Fig. 27a-d show a device that contains yeast or other ingredients, placed on the second part of the embodiment. By pulling or screwing an outer part of the device, the yeast falls into the other ingredients. Afterwards it is possible to fill liquid into the embodiment due to the hole 37 being provided in the tread 38.

Fig. 28a-c show a device with multiple functions, the device is placed on or is a part of packing according to the present invention. The device can contain ingredients, for instance yeast, in a manner similar to the device of fig. 27. Water, other ingredients or liquids can be transferred trough the device and into the packing. By screwing or removing an outer part 39 of the device it moves upwardly relative to a foil 39b and a sharp edge, spikes or the alike 39a makes the foil 39b break and hereby allow the ingredient(s) such as yeast to fall into the other ingredients. Afterwards, liquid such as water can be poured though the device either by removing the outer part 39 or through an opening in the inner part similar to opening 37 shown in fig. 27 and into the packing. When the right amount of fluid is added to the embodiment, the device can be closed/sealed by screwing/pushing the device back into its original position shown in fig. 28a.

Fig. 29a-h show a packing according to the present invention having a build in container 40 for yeast 45 or other ingredients. Once the lid 46 is opened, the yeast 45 falls into the ingredients being pre-filled into the container. The container 40 is placed below the lid 46, and a string 41 is mounted to the lid 46 and to the bottom of the container 40. Upon opening of the lid 46, the string 41 being mounted to the lid 46 tears an opening in the bottom of the container 40, and the ingredients fall into the packing. Afterwards liquid can be poured into the packing though the same opening.

Fig. 30a-d show a packing according to the present invention having a build in container 42 for containing liquid (the container may, of course, hold other ingredients such as yeast). Liquid is added through a hole 43 into the container, and once it is full an opening in the bottom of the container 42 may be provided by pulling in the string 44 whereby the liquid flows into the packing containing other ingredients. Finally, the ingredients may be mixed with the liquid by shaking the packing as indicated in fig. 30d.

Fig. 31a-d show a packing according to the present invention designed to ease filling of liquid into the packing. The packing comprises a valve means 46, and ensures that liquid can be poured into the embodiment, but it cannot come back out. The valve means 46 comprising foil 48 or similar material is attached to the second part 3 of the packing, which second part comprises an initially covered opening 49. When liquid is added through the opening 49, it flows through channels 47 and into the packing. The foil 48 can be shaped in many different ways as indicated in fig. 31d.

Fig. 32a-e show schematically the use of a prefilled packing not part of the invention. The packing comprises a bag 49 being pre-filled with ingredients and air is sucked out of the packing to produce a vacuum packed device. The bag 49, which may preferably be made of plastic or similar material, is of such a size that it may contain the ingredients as well as the liquid to be added to the ingredients and still allow for a constriction as indicated in fig. 32c. As a result of this size the vacuum packed device may have the shape indicated in fig. 32a in which the ingredients are located in a lower part 51 of the bag and the upper part of the bag 50 is made into a substantially flat member which may be sealed but allowing for a tear open action. The use of the device 49 is shown divided into four steps in figs. 32b-e.

Figs. 33 and 34 show schematically different types of packings according to the invention in which it is possible to increase the volume of the packing, preferably before the liquid is added. Hereby it is possible to keep the volume of packing and thereby the necessary storage space limited before the packing is to be used.

Figs. 33a-d show a preferred embodiment of a packing according to the invention in which the volume of the first part can be increased. The packing comprising a first part 2 and a second part 3 in the form of a tear-off foil. The first part comprising foldable side wall elements 57 enabling the first part to have its height extended from the one shown in fig. 33a and to the one shown in fig. 33c. Fig. 33d shows the packing containing a bread and/or cake dough. The packing of fig. 33a-d may preferably comprise a stirring instrument, such as a spoon, arranged within the packing together with the ingredients. Such a stirring instrument may also be pre-packed in other embodiments of the invention.

Figs. 34a-b show another preferred embodiment of a packing according to the invention in which the volume of the first part can be increased. The packing comprising a first part 2 and a second part 3 having a hinged lid 13 similar to the lid shown in fig. 8. The second part is similar to the embodiment of fig. 1 constituted by a local weakening preferably being a scored line 4 of the packing. The scored line 4 is left out in fig. 34b for clarity reasons. The first part 2 comprises two parts 2a and 2b. Part 2b is arranged within part 2a in a slideable manner so that the volume of the packing can be increased. The extension of part 2b is shown in fig. 33d by dotted lines.

Figs. 35a-c show a preferred embodiment of a packing according to the invention, wherein the first part 2 comprises an open cavity and the second part comprises a lid 52 covering the opening of the cavity. The two parts 2, 52 being joined in a region along their outer periphery 58 preferably after filling the packing with ingredients of which one or more are stored in one or more separate containers 53 arranged at the underside of the lid 52 (in figs. 35a-c the lid 52 is sketched transparent so as to render the container 53 visible in the drawings). The lid 52 comprises scored lines 54 defining a tear-open flap 55 which defines a re-closeable opening of a part of the lid through which liquid can be added. The lid 52 furthermore comprises a metering device 15 comprising a transparent part through which the level of liquid present in the packing may be identified. The transparent part is preferably provided with a visible scale. The one or more containers 53 are arranged within the cavity in such a manner that they are torn open as a result of the opening of the tear-open flap, which results in the ingredients 56 from the container being added to the other ingredients.

It is noted that when using embodiments of the packing 1 according to the present invention where an opening large enough to allow a spoon or the like to access the interior of the packing, the ingredients may, of course, be mixed or further mixed by use of a spoon or the alike.

## Claims

1. A packing (1) for food ingredients comprising a container having first part (2) and a second part (3),
- the second part being removable from the first part to provide an opening (6) into said container,
- the first part (2) being made from one or more materials being resistant to temperatures up to 300°C, to allow the first part (2) to be used as a baking tin,
- said packing (1) being adapted to keep ingredients contained in the packing (1) inside the packing prior to removal of the second part (3), and the packing preferably containing ingredients for producing a bread and/or cake dough, **characterised in that**
- the second part (3) comprises a lid (5) which upon removal/opening provides an opening (6) which is closable by the lid (5).

2. A packing according to claim 1, wherein the first part is made of a material being resistant to temperatures up to 250°C.

3. A packing according to claim 1 or 2, wherein the first part is made of a material being resistant to temperatures up to 200°C.

4. A packing (1) according to claim 1-3, wherein the second part (3) is made of the same material as the first part (2).

5. A packing (1) according to claim 1, wherein the seal between the lid (5) and the packing (1) is provided and/or enhanced by an o-ring (11), a welding, tape, and/or glue.

6. A packing (1) according to claim 1 or 5, wherein the lid (5) is provided on a foldable part (10) of the packing, said foldable part (10) is adapted to be folded in such a manner that the lid (5) can be depressed below an outer surface of the first part (2).

7. A packing (1) according to claim 6, wherein the lid (5) comprises gripping means for extracting the lid (5) to a position above an outer surface of the packing (1) by use of a finger.

8. A packing (1) according to any of the preceding claims, comprising a metering device (14,24) for metering an amount of liquid added to the packing (1).

9. A packing (1) according to claim 8, wherein the metering device (14,24) comprises a transparent element (19) through which the level of liquid present in the packing (1) may be identified, said transparent part (15) being preferably provided with a visible scale.

10. A packing (1) according to claim 8 or 9, wherein the metering device (14,24) comprises an overflow opening through which excess fluid may leave the container (1).

11. A packing (1) according to any of the preceding claims, wherein the interior of the packing is divided into sections (19,21) being sealed off from one another by one or more sealing members (20).

12. A packing (1) according to claim 11, wherein one of the sections (19,21) is in fluid communication with the opening (6).

13. A packing (1) according to claim 12, wherein the section being in fluid communication with the opening (6) contains yeast (15).

14. A packing (1) according to claim 12 or 13, wherein the volume of the section (19,21) being in fluid communication with the opening (6) has a volume corresponding to the amount of liquid to be added to the packing (1).

15. A packing (1) according to any of the claims 11-14, wherein the one or more sealing members break as a result of adding liquid to the container and/or shaking of and/or stirring in the packing after liquid has been added to the packing.

16. A packing (1) according to any of the claims 11-15, wherein the sealing members are made from a liquid soluble material.

17. A packing (1) according to any of the preceding claims, wherein the second part (3) comprises a tear off section (16) which when being removed provides an opening (6) into the packing (1).

18. A packing (1) according to claim 17, wherein the tear off section provides an opening having an area larger than 1/10th, of the total outer area of the packing.

19. A packing (1) according to any of the preceding claims, wherein the volume of the packing is in the range of 0.1-5 litres.

20. A packing (1) according to any of the preceding claims, wherein the packing is made from a flexible material so that it is foldable.

21. A packing (1) according to any of the preceding claims, wherein said packing is fluid tight prior to removal of the second part (3).

22. A packing (1) according to any of the preceding claims, wherein the packing is fluid tightly sealed in order to preserve the baking ingredients until use.

23. A packing (1) according to any of the preceding claims, wherein the first part (2) comprises an open cavity and the second part (3) comprises a lid (52) covering the opening (6) of the cavity, the two parts being joined preferably after filling the packing with ingredients (56) of which one or more are stored in one or more separate containers, said second part comprises
- scored lines (54) defining a tear-open flap (55) defining an opening, preferably being re-closable, in a part of the lid (52) through which liquid can be added,
- a metering device comprising a transparent part through which the level of liquid present in the packing may be identified, said transparent part being preferably provided with a visible scale,
the one or more containers (53) being arranged within the cavity in such a manner that they are torn open as a result of the opening of the tear-open flap.

24. A packing (1) according to claim 23, wherein the one or more containers (53) containing one or more ingredients (56) are attached to the inside of the packing, preferably to the second part, and/or in the region in which the two parts are joined, in such a manner that the ingredients (56) contained in said one or more containers (56) are added to the other ingredients, when the tear-open flap (55) is opened.

25. A packing (1) according to claim 24, wherein the one or more containers (53) have an elongated shape and have one end attached to the tear-open flap (55) and the other end attached to the packing distant from the tear-open flap (55), preferably in region where the first and the second parts are joined.

26. A method of producing a bread and/or cake dough, such method utilising a packing according to any of the claims 1-25 having a first part (2) made from materials resistant to temperatures up to 300°C, making it suitable to be used as a baking tin, a second part (3) being removable from the first part (2) to provide an opening (6) into the container, said packaging being prefilled with baking ingredients, the method comprising
- adding liquid, preferably in the right relation, such as a predefined relation, between ingredients and liquid, to the packing,
- and then shaking and/or stirring the ingredients and fluid in the packing,
- and finally baking the produced dough in the first part of the packing.

27. A method according to claim 26, wherein liquid is added in an amount so that the ratio in weight between liquid and the other ingredients is between 1:0.5 and 1:2.5.

28. A method according to claim 26 or 27, wherein one of the ingredients is a raising agent.

29. A method according to any of the claims 26-29, wherein liquid is added to the container after at least 75% by weight of the other ingredients are mixed.

30. A method according to any of the claims 26-28, wherein the packing is a packing according to any of the claim 1-27.

## Patentansprüche

1. Eine Verpackung (1) für Lebensmittelzutaten mit einem Behälter mit einem ersten Teil (2) und einem zweiten Teil (3),
- der zweite Teil von dem ersten Teil entfernbar ist, um eine Öffnung (6) in dem Behälter zu bilden,
- der erste Teil (2) aus einem oder mehreren Materialien besteht, die gegenüber Temperaturen bis zu 300°C widerstandsfähig sind, um es dem ersten Teil (2) zu erlauben, als Backblech genutzt zu werden,
- die Verpackung (1) dazu eingerichtet ist, die Zutaten, die in der Verpackung (1) beinhaltet sind, vor dem Entfernen des zweiten Teils (3) im Inneren der Verpackung zu beizubehalten, und vorzugsweise die Verpackung Zutaten zum Herstellen eines Brot- und/oder Kuchenteigs beinhaltet,
**dadurch gekennzeichnet, dass**
der zweite Teil (3) eine Lasche (5) aufweist, die bei Entfernen/Öffnen eine Öffnung (6) schafft, die durch die Lasche (5) verschließbar ist.

2. Eine Verpackung nach Anspruch 1, wobei der erste Teil aus einem Material gefertigt ist, das gegenüber Temperaturen von bis zu 250°C widerstandsfähig ist.

3. Eine Verpackung nach Anspruch 1 oder 2, wobei der erste Teil aus einem Material gefertigt ist, das gegenüber Temperaturen von bis zu 200°C widerstandsfähig ist.

4. Eine Verpackung (1) nach Anspruch 1 - 3, wobei der zweite Teil (3) aus demselben Material wie der erste Teil (2) gefertigt ist.

5. Eine Verpackung (1) nach Anspruch 1, wobie die Dichtung zwischen der Lasche (5) und der Verpackung (1) durch einen O-Ring (11), eine Verschweißung, einem Klebeband und/oder einem Klebstoff geschaffen und/oder verbessert wird.

6. Eine Verpackung (1) nach Anspruch 1 oder 5, wobei die Lasche (5) auf einem faltbaren Teil (10) der Verpackung vorgesehen ist und der faltbare Teil (10) dazu eingerichtet ist, derart gefaltet zu werden, dass die Lasche (5) unterhalb einer äußeren Fläche eines ersten Teils (2) nach unten niedergedrückt werden kann.

7. Eine Verpackung (1) nach Anspruch 6, wobei die Lasche (5) Greifmittel zum Herausziehen der Lasche (5) in eine Position oberhalb einer äußeren Fläche der Verpackung (1) unter Verwendung eines Fingers aufweist.

8. Eine Verpackung (1) nach einem der vorangehenden Ansprüche, mit einer Dosiereinrichtung (14, 24) zum Dosieren der Menge von zu der Verpackung (1) zuzugebenden Flüssigkeit.

9. Eine Verpackung (1) nach Anspruch 8, wobei die Dosiereinrichtung (14, 24) ein transparentes Element (19) aufweist, durch das die Höhe der Flüssigkeit, die in der Verpackung (1) vorhanden ist, erkannt werden kann, wobei der transparente Teil (15) vorzugsweise mit einer sichtbaren Skala versehen ist.

10. Eine Verpackung (1) nach Anspruch 8 oder 9, wobei die Dosiereinrichtung (14, 24) eine Überstromöffnung aufweist, durch die überschüssige Flüssigkeit den Behälter (1) verlassen kann.

11. Eine Verpackung (1) nach einem der vorangehenden Ansprüche, wobei das Innere der Verpackung in Abschnitte (19, 21) geteilt ist, die durch eines oder mehrere Dichtelemente (20) gegeneinander abgedichtet sind.

12. Eine Verpackung (1) nach Anspruch 11, wobei einer der Abschnitte (19,21) in fluidischer Kommunikation mit der Öffnung (6) ist.

13. Eine Verpackung (1) nach Anspruch 12, wobei der Abschnitt, der in fluidischer Kommunikation mit der Öffnung (6) ist, Hefe (15) aufweist.

14. Eine Verpackung (1) nach Anspruch 12 oder 13, wobei das Volumen des Abschnitts (19, 21), das in fluidischer Kommunikation mit der Öffnung (6) ist, ein Volumen hat, das der Menge an Flüssigkeit, die der Packung (1) zuzugeben ist, entspricht.

15. Eine Verpackung (1) nach einem der Ansprüche 11 - 14, wobei das eine oder die mehreren Dichtelemente in Folge der Zugabe von Flüssigkeit in den Behälter und/oder einem Schütteln und/oder einem Rühren in der Verpackung, nachdem die Flüssigkeit der Verpackung zugegeben worden ist, bricht.

16. Eine Verpackung (1) nach einem der Ansprüche 11 - 15, wobei die Dichtelemente aus einem in einer Flüssigkeit lösbaren Material besteht.

17. Eine Verpackung (1) nach einem der vorangehenden Ansprüche, wobei der zweite Teil (3) einen Abziehabschnitt (16) aufweist, der bei Entfernen eine Öffnung (6) in der Verpackung (1) bildet.

18. Eine Verpackung (1) nach Anspruch 17, wobei der Abziehabschnitt eine Öffnung mit einem Bereich größer als 1/10tel bildet.

19. Eine Verpackung (1) nach eine der vorangehenden Ansprüche, wobei das Volumen der Verpackung im Bereich von 0,1 - 5 Litern liegt.

20. Eine Verpackung (1) nach einem der vorangehenden Ansprüche, wobei die Verpackung aus einem flexiblen Material besteht, so dass sie faltbar ist.

21. Eine Verpackung (1) nach einem der vorangehenden Ansprüche, wobei die Verpackung vor dem Entfernen des zweiten Teils (3) flüssigkeitsdicht ist.

22. Eine Verpackung (1) nach einem der vorangehenden Ansprüche, wobei die Verpackung flüssigkeitsdicht abgeschlossen ist, um die Backzutaten bis zur Verwendung zu schützen.

23. Eine Verpackung (1) nach einem der vorangehenden Ansprüche, wobei der erste Teil (2) eine offene Höhlung aufweist und der zweite Teil (3) eine Lasche (52) aufweist, die die Öffnung (6) der Höhlung abdeckt und die beiden Teile vorzugsweise nach dem Füllen der Packung mit den Zutaten (56), von denen eine oder mehrere in einem oder mehreren gesonderten Behältern gelagert sind, verbunden wird, wobei der zweite Teil aufweist:
- gekerbte Linien (54), die eine Aufziehklappe (55) definieren, die eine vorzugsweise wieder verschließbare Öffnung in einem Teil der Lasche (52) begrenzt, durch die Flüssigkeit hinzugegeben werden kann,
- eine Dosiereinrichtung mit einem transparenten Teil, durch das die Höhe der Flüssigkeit, die in der Verpackung vorhanden ist, festgestellt werden kann und die vorzugsweise mit einer sichtbaren Skala versehen ist,
wobei der eine oder die mehreren Behälter (53) in der Höhlung derart angeordnet sind, dass sie in Folge der Öffnung der Aufziehklappe aufgezogen werden.

24. Eine Verpackung (1) nach Anspruch 23, wobei der eine oder die mehreren Behälter (53), die eine oder mehrere Zutaten (56) beinhalten, an der Innenseite der Verpackung angebracht sind, vorzugsweise an dem zweiten Teil und/oder in dem Bereich, in dem die beiden Teile miteinander verbunden sind, derart, dass die Zutaten (56), die in dem einen oder den mehreren Behältern (56) beinhaltet sind, zu den anderen Zutaten zugegeben werden, wenn die Aufziehklappe (55) geöffnet wird.

25. Eine Verpackung (1) nach Anspruch 24, wobei der eine oder die mehreren Behälter (53) eine längliche Form haben und ein Ende haben, das an der Aufziehklappe (55) angebracht ist und das andere Ende an der Verpackung mit Abstand von der Aufziehklappe (55) angebracht ist, vorzugsweise in dem Bereich, in dem der erste und der zweite Teil miteinander verbunden sind.

26. Ein Verfahren zum Herstellen eines Brot und/oder Kuchenteigs, wobei das Verfahren eine Verpackung, die mit Backzutaten vorgefüllt ist, nach einem der vorangehenden Ansprüche 1 - 25 verwendet, mit einem ersten Teil (2), der aus Materialien, die gegenüber Temperaturen bis 300°C widerstandsfähig sind, was die Verpackung für eine Verwendung als Backblech geeignet macht, einem zweiten Teil (3), der von dem ersten Teil (2) zur Schaffung einer Öffnung (6) in dem Behälter entfernbar ist, wobei das Verfahren aufweist:
- Zuführen von Flüssigkeit, vorzugsweise in dem richtigen Verhältnis, wie einem vorgegebenen Verhältnis, zwischen Zutaten und Flüssigkeit zu der Verpackung,
- anschließendes Schütteln und/oder Rühren der Zutaten und der Flüssigkeit in der Verpackung,
- und schließlich Backen des hergestellten Teils in dem ersten Teil der Verpackung.

27. Ein Verfahren nach Anspruch 26, wobei die Flüssigkeit in einer solchen Menge zugegeben wird, dass das Gewichtsverhältnis zwischen der Flüssigkeit und den anderen Zutaten zwischen 1:0,5 und 1:2,5 ist.

28. Ein Verfahren nach Anspruch 26 oder 27, wobei die eine der Zutaten ein Treibmittel ist.

29. Ein Verfahren nach einem der Ansprüche 26 - 29, wobei Flüssigkeit zu dem Behälter zugegeben wird, nachdem wenigstens 75 Gew.% der anderen Zutaten vermischt sind.

30. Ein Verfahren nach einem der Ansprüche 26 - 28, wobei die Verpackung eine Verpackung nach einem der Ansprüche 1 - 27 ist.

## Revendications

1. Emballage (1) pour des ingrédients alimentaires comprenant un contenant comportant une première partie (2) et une deuxième partie (3),
- la deuxième partie pouvant être retirée de la première partie pour réaliser une ouverture (6) dans ledit contenant,
- la première partie (2) étant réalisée à partir d'un ou de plusieurs matériaux qui sont résistants aux températures s'élevant jusqu'à 300 °C, pour permettre que la première partie (2) soit utilisée en tant que moule de cuisson,
- ledit emballage (1) étant conçu pour maintenir les ingrédients contenus dans l'emballage (1) à l'intérieur de l'emballage avant le retrait de la deuxième partie (3), et l'emballage contenant de préférence des ingrédients pour produire une pâte à pain et/ou à gâteau, **caractérisé en ce que**
- la deuxième partie (3) comprend un couvercle (5) qui, lors du retrait/de l'ouverture réalise une ouverture (6) qui peut être fermée par le couvercle (5).

2. Emballage selon la revendication 1, dans lequel la première partie est constituée d'un matériau qui est résistant aux températures s'élevant jusqu'à 250 °C.

3. Emballage selon la revendication 1 ou 2, dans lequel la première partie est constituée d'un matériau qui est résistant aux températures s'élevant jusqu'à 200 °C.

4. Emballage (1) selon les revendications 1 à 3, dans lequel la deuxième partie (3) est constituée du même matériau que la première partie (2).

5. Emballage (1) selon la revendication 1, dans lequel le joint entre le couvercle (5) et l'emballage (1) est réalisé et/ou amélioré par un joint torique (11), un soudage, une bande adhésive et/ou de la colle.

6. Emballage (1) selon la revendication 1 ou 5, dans lequel le couvercle (5) est prévu sur une partie repliable (10) de l'emballage, ladite partie repliable (10) étant conçue pour être repliée d'une manière telle que le couvercle (5) puisse être abaissé au-dessous d'une surface extérieure de la première partie (2).

7. Emballage (1) selon la revendication 6, dans lequel le couvercle (5) comprend des moyens de préhension pour extraire le couvercle (5) à une position au-dessus d'une surface extérieure de l'emballage (1) en utilisant un doigt.

8. Emballage (1) selon l'une quelconque des revendications précédentes, comprenant un dispositif de mesure (14, 24) pour mesurer une quantité de liquide ajoutée dans l'emballage (1).

9. Emballage (1) selon la revendication 8, dans lequel le dispositif de mesure (14, 24) comprend un élément transparent (19) à travers lequel le niveau de liquide présent dans l'emballage (1) peut être identifié, ladite partie transparente (15) étant de préférence pourvue d'une échelle visible.

10. Emballage (1) selon la revendication 8 ou 9, dans lequel le dispositif de mesure (14, 24) comprend une ouverture de trop-plein à travers laquelle le fluide en excès peut s'écouler hors du contenant (1).

11. Emballage (1) selon l'une quelconque des revendications précédentes, dans lequel l'intérieur de l'emballage est divisé en sections (19, 21) séparées les unes des autres de façon étanche par un ou plusieurs éléments d'étanchéité (20).

12. Emballage (1) selon la revendication 11, dans lequel l'une des sections (19, 21) est en communication fluidique avec l'ouverture (6).

13. Emballage (1) selon la revendication 12, dans lequel la section qui est en communication fluidique avec l'ouverture (6) contient de la levure (15).

14. Emballage (1) selon la revendication 12 ou 13, dans lequel le volume de la section (19, 21) qui est en communication fluidique avec l'ouverture (6) est un volume correspondant à la quantité de liquide à ajouter dans l'emballage (1).

15. Emballage (1) selon l'une quelconque des revendications 11 à 14, dans lequel lesdits un ou plusieurs éléments d'étanchéité se rompent en conséquence de l'ajout de liquide dans le contenant et/ou du secouement et/ou de l'agitation de l'emballage après que le liquide a été ajouté dans l'emballage.

16. Emballage (1) selon l'une quelconque des revendications 11 à 15, dans lequel les éléments d'étanchéité sont réalisés à partir d'un matériau soluble dans un liquide.

17. Emballage (1) selon l'une quelconque des revendications précédentes, dans lequel la deuxième partie (3) comprend une section déchirable (16) qui, lorsqu'elle est retirée réalise une ouverture (6) dans l'emballage (1).

18. Emballage (1) selon la revendication 17, dans lequel la section déchirable réalise une ouverture dont l'aire est supérieure à 1/10^{ème} de l'aire externe totale de l'emballage.

19. Emballage (1) selon l'une quelconque des revendications précédentes, dans lequel le volume de l'emballage est dans la plage de 0,1 à 5 litres.

20. Emballage (1) selon l'une quelconque des revendications précédentes, dans lequel l'emballage est réalisé à partir d'un matériau souple de sorte qu'il puisse être plié.

21. Emballage (1) selon l'une quelconque des revendications précédentes, dans lequel ledit emballage est étanche aux fluides avant le retrait de la deuxième partie (3).

22. Emballage (1) selon l'une quelconque des revendications précédentes, dans lequel l'emballage est fermé de façon étanche aux fluides afin de préserver les ingrédients de cuisson jusqu'à leur utilisation.

23. Emballage (1) selon l'une quelconque des revendications précédentes, dans lequel la première partie (2) comprend une cavité ouverte et la deuxième partie (3) comprend un couvercle (52) recouvrant l'ouverture (6) de la cavité, les deux parties étant jointes de préférence après le remplissage de l'emballage avec des ingrédients (56) dont un ou plusieurs sont stockés dans un ou plusieurs contenants séparés, ladite deuxième partie comprenant
- des lignes de pliure (54) définissant un rabat d'ouverture par déchirement (55) définissant une ouverture, de préférence refermable, dans une partie du couvercle (52) à travers laquelle du liquide peut être ajouté,
- un dispositif de mesure comprenant une partie transparente à travers laquelle le niveau de liquide présent dans l'emballage peut être identifié, ladite partie transparente étant de préférence pourvue d'une échelle visible,
lesdits un ou plusieurs contenants (53) étant agencés dans la cavité d'une manière telle qu'ils sont ouverts par déchirement en conséquence de l'ouverture du rabat d'ouverture par déchirement.

24. Emballage (1) selon la revendication 23, dans lequel lesdits un ou plusieurs contenants (53) contenant un ou plusieurs ingrédients (56) sont attachés à l'intérieur de l'emballage, de préférence à la deuxième partie, et/ou dans la région dans laquelle les deux parties sont jointes, d'une manière telle que les ingrédients (56) contenus dans lesdits un ou plusieurs contenants (56) soient ajoutés aux autres ingrédients, lorsque le rabat d'ouverture par déchirement (55) est ouvert.

25. Emballage (1) selon la revendication 24, dans lequel lesdits un ou plusieurs contenants (53) ont une forme allongée et ont une extrémité attachée au rabat d'ouverture par déchirement (55) et l'autre extrémité attachée à l'emballage à distance du rabat d'ouverture par déchirement (55), de préférence dans la région où les première et deuxième parties sont jointes.

26. Procédé de production d'une pâte à pain et/ou à gâteau, ce procédé utilisant un emballage selon l'une quelconque des revendications 1 à 25 comportant une première partie (2) réalisée à partir de matériaux qui sont résistants aux températures s'élevant jusqu'à 300 °C, ce qui la rend utilisable en tant que moule de cuisson, et une deuxième partie (3), qui peut être retirée de la première partie (2) pour réaliser une ouverture (6) dans le contenant, ledit emballage étant rempli au préalable d'ingrédients de cuisson, le procédé comprenant
- l'ajout de liquide, de préférence dans les bonnes proportions, telles que des proportions prédéfinies, entre les ingrédients et le liquide, dans l'emballage,
- et ensuite le secouement et/ou l'agitation des ingrédients et du fluide dans l'emballage,
- et enfin la cuisson de la pâte produite dans la première partie de l'emballage.

27. Procédé selon la revendication 26, dans lequel le liquide est ajouté en une quantité telle que le rapport en poids entre le liquide et les autres ingrédients soit entre 1:0,5 et 1:2,5.

28. Procédé selon la revendication 26 ou 27, dans lequel l'un des ingrédients est un agent levant.

29. Procédé selon l'une quelconque des revendications 26 à 29, dans lequel le liquide est ajouté dans le contenant après qu'au moins 75 % en poids des autres ingrédients ont été mélangés.

30. Procédé selon l'une quelconque des revendications 26 à 28, dans lequel l'emballage est un emballage selon l'une quelconque des revendications 1 à 27.
